# EUROPÄISCHE PATENTSCHRIFT

(11) **EP 0 439 837 B1**
(45) Veröffentlichungstag und Bekanntmachung des Hinweises auf die Patenterteilung: **27.07.1994**
(21) Anmeldenummer: 90125734.5
(22) Anmeldetag: 28.12.1990
(51) Int. Cl.: B62B 3/06

(54) **Gabelhubwagen**
Fork-lift truck
Chariot à fourche

(30) Priorität: 02.02.1990 DE 4003135
(43) Veröffentlichungstag der Anmeldung: 07.08.1991
(73) Patentinhaber: STEINBOCK BOSS GmbH, D-85368 Moosburg (DE)
(72) Erfinder: Klemm, Christian, Dipl.-Ing., W-8300 Ergolding (DE)
(74) Vertreter: Weickmann, Heinrich, Dipl.-Ing.

(56) Entgegenhaltungen:
- DE-A- 1 932 507
- DE-B- 1 245 561
- DE-C- 3 614 986
- US-A- 3 246 713
- US-A- 4 886 284

## Beschreibung

Die Erfindung betrifft einen Gabelhubwagen mit einem lenkbaren Fahrwerk und einem an dem Fahrwerk geführten Lastträger, insbesondere mit einer Lasttraggabel, wobei ein fahrwerknaher Bereich des Lastträgers durch mindestens ein Hubgerät des Fahrwerks höhenverstellbar abgestützt ist und ein fahrwerkferner Bereich des Lastträgers durch mindestens ein an diesem mittels einer höhenverstellbaren Laufradhalterung gelagerten Laufrads unterstützt ist, wobei weiter die Höhenverstellung des Laufrads gegenüber dem fahrwerkfernen Bereich des Lastträgers von der Höheneinstellung des fahrwerknahen Bereichs des Lastträgers gegenüber dem Fahrwerk abgeleitet ist und zwar vermittels eines mit dem Fahrwerk einerseits und dem fahrwerknahen Bereich andererseits verbundenen Lenkersystems und vermittels eines diesem Lenkersystem nachgeschalteten, auf die Laufradhalterung wirkenden Gestänges, und wobei das Lenkersystem zusätzlich durch mindestens ein Stellgerät beeinflußbar ist.

Derartige Gabelhubwagen werden unter anderem für das Transportieren von auf dem Fahrboden stehenden palettierten Lasten eingesetzt. Dabei wird der Lastträger unter die Palette gefahren und mittels des Hubgerätes so weit angehoben, daß die Palette vom Fahrboden abhebt, wodurch der Gabelhubwagen mit der Last verfahren werden kann. Die Laufradhalterung und die Führung des Lastträgers an dem Fahrwerk sind dabei im Regelfall so aufeinander abgestimmt, daß sich die Lasttraggabel des Lastträgers in allen möglichen Hubstellungen parallel zur Fahrbodenebene befindet. Diese Parallelstellung kann aber dann von Nachteil sein, wenn sich die Palette am Rand einer horizontalen Abstellfläche befindet und der Gabelhubwagen auf einer zu dieser horizontalen Abstellfläche führenden Rampe steht. Eine Aufnahme der Palette kann dann nur erfolgen, wenn sich die Lasttraggabel aus ihrer Parallelstellung in eine geneigte Stellung gegenüber dem Fahrboden bringen läßt.

Ein Gabelhubwagen der eingangs genannten Art, der auch dann eingesetzt werden kann, wenn die Stellfläche und der Fahrboden einen Winkel zueinander bilden, ist aus der DE-PS 36 14 986 bekannt. Hierzu weist das für die beiden Laufradhalterungen dieses Gabelhubwagens vorgesehene Lenkersystem drei hintereinander angeordnete und gegeneinander bewegliche Hebel auf, wobei an dem mittleren Hebel ein Stellgerät zur Beeinflussung des Lenkersystems während des Einsatzes des Gabelhubwagens angreift. Diese Hebel weisen eine komplizierte Gestalt und Verkopplung auf. Darüber hinaus erfolgt bei diesem Gabelhubwagen die Führung des Lastträgers an dem Fahrwerk durch eine zusätzliche Parallelführung. Hierzu besitzt das Fahrwerk vertikal verlaufende Führungsschienen, in die an dem Lastträger angebrachte Führungsrollen eingreifen. Diese Parallelführung weist somit eine Vielzahl von Bauteilen auf. Die Funktion "Führung des Lasträgers am Fahrwerk" und die Funktion "Neigungsverstellung der Lasttraggabel" wird also bei diesem Gabelhubwagen durch je eine unabhängige Baugruppen verwirklicht, wodurch insgesamt der Aufwand für die Herstellung und die Montage dieses Gabelhubwagens groß ist. Dies umso mehr als auf die Kompatibilität dieser beiden Baugruppen geachtet werden muß.

Aus der auf einer Zusatzpatentanmeldung zu der genannten DE-PS 36 14 986 basierenden DE-PS 37 10 776 ist ein weiterer Gabelhubwagen mit der Möglichkeit der Neigungsverstellung des Lastenträgers relativ zum Fahrboden bekannt, wobei das Lenkersystem dieses Gabelhubwagens im wesentlichen aus einem zweiarmigen Winkelhebel besteht, der drehbeweglich an dem Lastträger befestigt ist. Ein Hebelarm des Winkelhebels stützt sich an einer Stützfläche eines Fahrwerks oder Antriebsteils ab, wohingegen der andere Hebelarm mit einem zur Längenverstellung des auf die Laufradhalterung wirkenden Gestänges vorgesehenen und in das Gestänge integrierten Stellgerät verbunden ist. Eine Neigungsverstellung des Lastträgers kann erfolgen, wenn nach Anheben des Lastträgers mittels eines am Fahrwerk befestigen Hubgerätes eine Längenverstellung des auf die Laufradhalterung wirkenden Gestänges mittels des Stellgerätes vorgenommen wird. Wenngleich das Lenkersystem des Hubwagens gemäß der DE-PS 37 10 776 gegenüber dem in der DE-PS 36 14 986 beschriebenen Lenkersystem vereinfacht ist, kommt man bei dem Gabelhubwagen nach der DE-PS 37 10 776 nicht ohne die in der DE-PS 36 14 986 beschriebenen Mittel zur parallelen Führung des höhenbeweglichen Lastträgers an dem Fahrgestelll aus. Im Unterschied zu einem Gabelhubwagen der eingangs genannten gattungsgemäßen Art ist das Stellgerät des Gabelhubwagens nach der DE-PS 37 10 776 nicht dazu eingerichtet, betriebsmäßig auf das Lenkersystem einzuwirken. Es befindet sich vielmehr an einer dem Lenkersystem nachgeschalteten Stelle des Gestänges an einem aus platzgründen ungünstigen Ort im Bereich einer Lasttraggabel.

Aus der DE-PS 19 32 507 geht ein Gabelhubwagen hervor, bei dem der Lastträger mittels eines Lenkersystems entlang einer Kreisbogenbahn gegenüber dem Fahrwerk geführt ist. Bei diesem Gabelhubwagen ist die Lage jedes Laufrads gegenüber dem Lastträger einstellbar, wodurch sich auch die Lage des Lastträgers gegenüber dem Fahrboden verändern läßt. Hierzu weist das auf die Laufradhalterung wirkende Gestänge eine Schrauben-Muttern-Kombination auf, mittels derer die effektive Länge des Gestänges verstellt werden kann. Da aber die Schrauben-Muttern-Kombination unter der Lasttraggabel angeordnet ist, ist die Schrauben-Muttern-Kombination während des Einsatzes des Gabelhubwagens nicht zugänglich. Eine betriebsmäßige Veränderung der Stellung der Lasttraggabel gegenüber dem Fahrboden ist also bei diesem Gabelhubwagen nicht möglich.

Es ist Aufgabe der vorliegenden Erfindung, einen Gabelhubwagen der eingangs genannten Art zu schaffen, bei dem eine Parallelführung vermieden und gleichzeitig das Lenkersystem vereinfacht werden soll.

Die vorstehende Aufgabe wird dadurch gelöst, daß die Verbindung zwischen dem fahrwerknahen Bereich des Lastträgers und dem Hubgerät als Gelenkverbindung mit einer ersten Gelenkachse ausgebildet ist, daß ferner der fahrwerknahe Bereich des Lastträgers an dem Fahrwerk vermittels mindestens eines als Dreipunktlenker ausgeführten Lenkersystems auf einer Kreisbogenbahn geführt ist, welcher Dreipunktlenker in einer zweiten Gelenkachse mit dem Fahrwerk, in einer dritten Gelenkachse mit dem fahrwerknahen Bereich des Lastträgers und in einer vierten Gelenkachse mit dem Gestänge gelenkig verbunden ist und daß das Stellgerät entweder zur Verstellung der vierten Gelenkachse innerhalb des Dreipunktlenkers oder zur Verstellung der zweiten Gelenkachse gegenüber dem Fahrwerk eingesetzt ist.

Durch den Einsatz eines Lenkersystems, welches den Lastträger auf einer Kreisbogenbahn führt, wird eine Parallelführung vermieden. Außerdem kann hierdurch die funktionale Baugruppe "Führung des Lastträgers an dem Fahrwerk" und die funktionale Baugruppe "Neigungsverstellung der Lasttraggabel" zusammengefaßt werden, wodurch sich die Fertigung und die Montage eines derartigen Gabelhubwagens weiter vereinfacht. Darüber hinaus läßt sich durch die Verwendung eines Dreipunktlenkers das Lenkersystem einfach und kostengünstig herstellen.

Ein besonders einfacher Aufbau des Lenkersystems wird dadurch erreicht, daß der Dreipunktlenker von einem die zweite Gelenkachse und die dritte Gelenkachse miteinander verbindenden Grundlenker, einer die dritte Gelenkachse und die vierte Gelenkachse verbindenden Gelenklasche und dem die zweite Gelenkachse und die vierte Gelenkachse miteinander verbindenden Stellgerät gebildet ist.

Eine andere Möglichkeit eines vereinfachten Aufbaus eines Lenkersystems ist dadurch gekennzeichnet, daß die zweite, dritte und vierte Gelenkachse an dem Dreipunktlenker in starrer gegenseitiger Lage angebracht sind und daß die zweite Gelenkachse gegenüber dem Fahrwerk in annähernd vertikaler Richtung verstellbar ist. Hierdurch kann das Lenkersystem durch ein einziges Teil gebildet sein.

Bildet das Stellgerät mit dem Hubgerät eine im wesentlichen vertikal an dem Fahrwerk angebrachte Baueinheit, so läßt sich hierdurch die Funktion "Verstellung der Gabelneigung durch ein Stellgerät" und die Funktion "Höhenverstellung der Lasttraggabel durch ein Hubgerät" von einer Baueinheit erfüllen, wodurch sich der Aufbau des Gabelhubwagens weiter vereinfacht.

Für das Stellgerät können die unterschiedlichsten Einrichtungen vorgesehen werden. Besonders vorteilhaft ist es, wenn das Stellgerät als Kolben-Zylinder-Einheit gestaltet ist. Wird für das Hubgerät ebenfalls mindestens eine Kolben-Zylinder-Einheit vorgesehen, so können hierdurch zur Betätigung des Stellgeräts und des Hubgeräts die gleichen Vorrichtungen verwendet werden. Beide Einheiten können dabei sowohl pneumatisch als auch hydraulisch betrieben werden.

Es genügt, den Stellzylinder mit nur einem Anschluß auszuführen. Dadurch wird ein vereinfachter Aufbau des Hydraulik- bzw. Pneumatikkreises für den Gabelhubwagen erzielt.

Dabei besteht eine erste Möglichkeit einer hydraulischen Schaltung darin, daß der Stellzylinder des Stellgeräts über ein Steuerventil mit gegebenenfalls integrierter Rückschlagsicherung an einen Hydraulikkreis mit Pumpe und Tank angeschlossen ist. Bei dieser Ausführungsform kann die geneigte Stellung der Lasttraggabel gegenüber dem Fahrboden aus ihrer angehobenen Parallelstellung heraus dadurch erreicht werden, daß eine Rückflußverbindung zwischen dem Stellgerät und dem Tank hergestellt wird. Um dann von der geneigten Stellung in die angehobene Parallelstellung zu gelangen, kann zum einen durch die Pumpe Druckfluid zu dem Stellzylinder des Stellgeräts gefördert werden, wodurch dessen Kolbenstange wieder ausgefahren wird. Zum anderen kann der fahrwerknahe Bereich des Lastträgers gegenüber dem Fahrwerk abgesenkt werden, wodurch die Kolbenstange des Stellgeräts herausgezogen wird und sich der Stellzylinder des Stellgeräts wieder mit Druckfluid füllt. Die Lasttraggabel nimmt dann eine untere Parallelstellung ein. Die Rückschlagsicherung des Ventils verhindert hierbei, daß sich der Stellzylinder des Stellgeräts während einer Parallelstellung der Lasttraggabel gegenüber dem Fahrboden nicht selbständig entleeren kann.

Auf die Verbindung des Stellzylinders des Stellgeräts mit der Pumpe kann aber auch verzichtet werden, wenn der Stellzylinder des Stellgeräts über ein Steuerventil mit gegebenenfalls integrierter Rückschlagsicherung wahlweise in Entleerungs- oder Füllverbindung mit einem Tank bringbar ist. Dann wird zum Schrägstellen des Lastträgers gegenüber dem Fahrboden aus seiner angehobenen Stellung heraus die Entleerungsverbindung hergestellt, so daß der Lastträger infolge seines Eigengewichts oder seiner Belastung oder infolge des Einfahrens in eine ansteigende Fahrstrecke unter Entleerung des Stellgeräts gegenüber dem Fahrboden schräggestellt wird. Andererseits kann der Lastträger wieder in seine abgesenkte Parallelstellung zum Fahrboden gebracht werden, in dem nach Herstellung der Füllverbindung der fahrwerknahe Lastträgerbereich gegenüber dem Fahrwerk abgesenkt wird, wobei sich dann der Stellzylinder des Stellgeräts füllt.

Um beim Einfahren der Kolbenstange des Stellgeräts eine möglichst feine Dosierung zu erreichen, ist es weiterhin vorteilhaft, daß in einer Rückflußleitung von dem Stellzylinder zum Tank ein Drosselventil eingeschaltet ist.

Um eine besonders einfache Handhabung des erfindungsgemäßen Gabelhubwagens zu ermöglichen, wird weiterhin vorgeschlagen, daß ein Betätigungsschalter für das Steuerventil an der Deichsel angebracht ist.

Weitere vorteilhafte Ausgestaltungen der Erfindung sowie Ausführungsbeispiele werden anhand der Zeichnung nachstehend beschrieben. Es zeigt:
- Fig. 1: eine Seitenansicht eines erfindungsgemäßen Gabelhubwagens mit zu dem Fahrboden paralleler Lasttraggabel in einer unteren Hubstellung;
- Fig. 2: eine Seitenansicht des Gabelhubwagens gemäß Fig. 1 mit zu dem Fahrboden paralleler Lasttraggabel in einer oberen Hubstellung;
- Fig. 3: eine Seitenansicht des Gabelhubwagens gemäß Fig. 1 mit eingestellter Gabelneigung;
- Fig. 4a: eine Detaildarstellung eines Lenkersystems des Gabelhubwagens gemäß Fig. 1
- Fig. 4b: eine Draufsicht auf das Lenkersystem gemäß Fig. 4a;
- Fig. 5: ein erstes Schema eines Hydraulikkreises für die Steuerung eines Hubgerätes und eines Stellgerätes;
- Fig. 6: ein zweites Schema eines Hydraulikkreises für die Steuerung des Hubgerätes und des Stellgerätes;
- Fig. 7: eine Seitenansicht eines weiteren erfindungsgemäßen Gabelhubwagens mit zu dem Fahrboden paralleler Lasttraggabel, wobei das Stellgerät außerhalb des Lenkersystems im Fahrwerk angeordnet ist; und
- Fig. 8: eine Seitenansicht des Gabelhubwagens gemäß Fig. 7 mit eingestellter Gabelneigung.

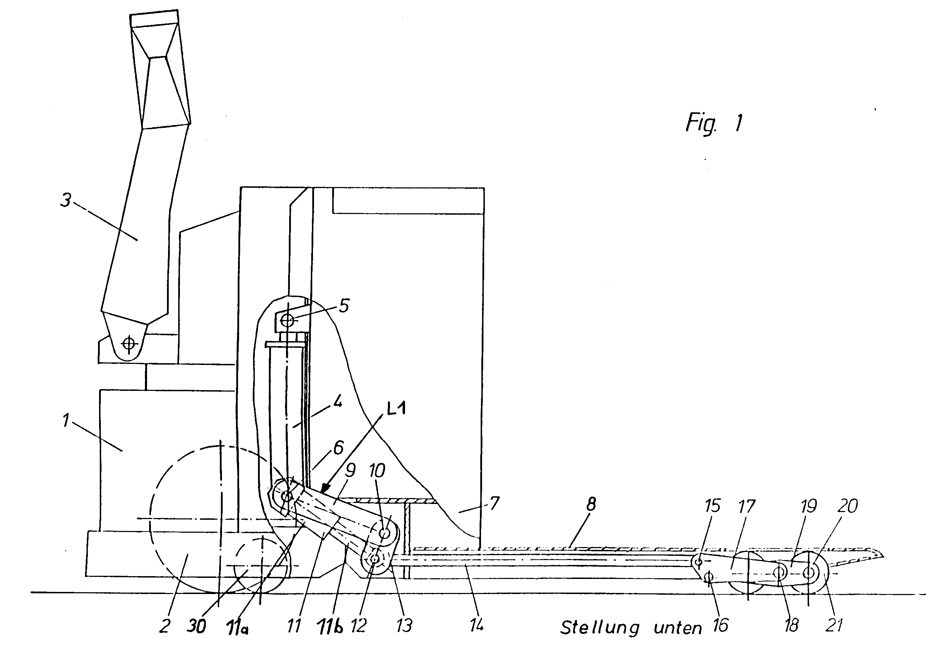

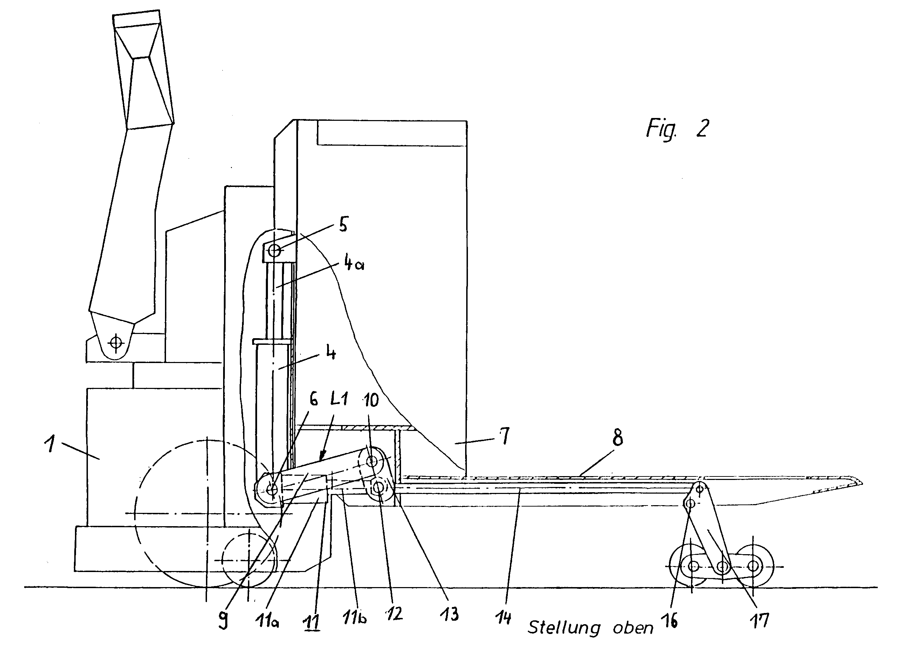

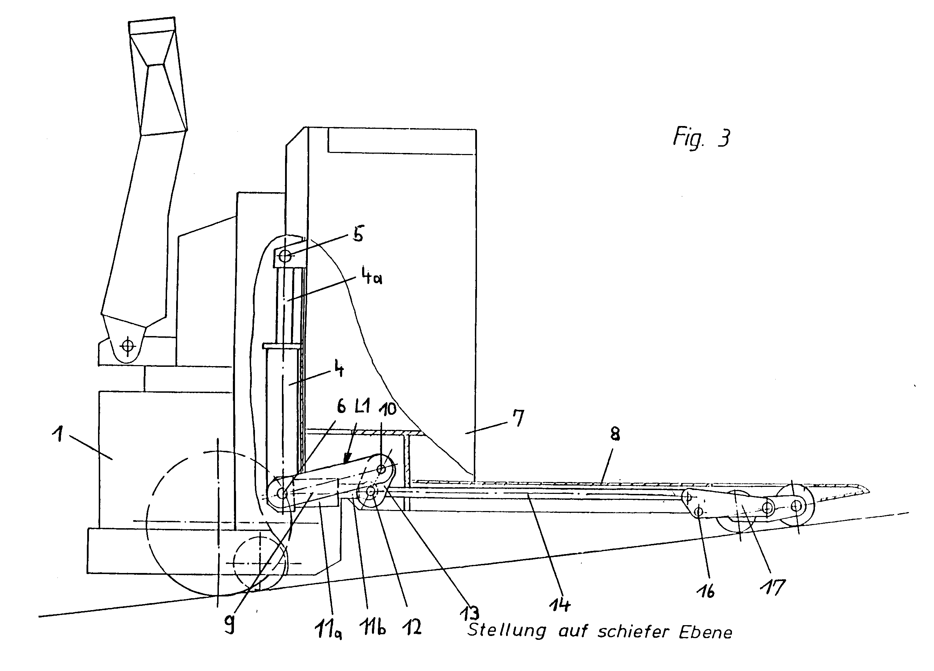

In den Fig. 1 - 3 ist ein erstes Ausführungsbeispiel eines erfindungsgemäßen Gabelhubwagens gezeigt. Er besteht aus einem Fahrwerk 1 mit einem mittig daran angebrachten, lenkbaren Antriebsrad 2 und einer Deichsel 3, an der nicht weiter gezeigte Bedienungselemente zur Handhabung des Gabelhubwagens angeordnet sind. In dem Fahrwerk 1 sind zwei ein Hubgerät bildende Hubzylinder 4 fest angebracht, die in den Fig. 1 - 3 senkrecht zu der jeweiligen Zeichenebene hintereinander angeordnet sind. Diese Zylinder 4 besitzen je eine vertikal nach oben ausfahrbare Kolbenstange 4a (vgl. Fig. 2, 3).

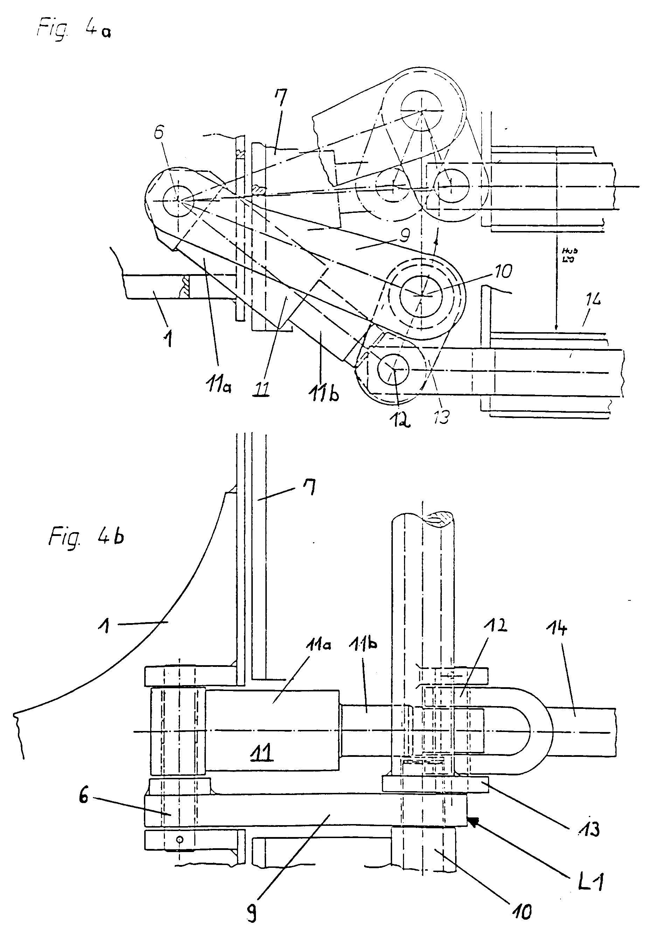

Der fahrwerknahe Bereich 7 eines Lastträgers 7, 8 ist zum einen in einer ersten Gelenkachse 5 mit den oberen Enden der Kolbenstangen 4a gelenkig verbunden. Zum anderen ist dieser fahrwerknahe Bereich 7 mit dem Fahrwerk 1 durch zwei Grundlenker 9 verbunden, die in je einer zweiten Gelenkachse 6 an dem Fahrwerk 1 und in einer an dem Lastträger 7, 8 fest angebrachten dritten Gelenkachse 10 an dem fahrwerknahen Bereich 7 des Lastträgers 7, 8 angelenkt sind (vgl. auch Fig. 4a, 4b). Der Lastträger 7, 8 ist mit einer an ihm fest angebrachten und horizontal verlaufenden Lasttraggabel 8 versehen, die als fahrwerkferner Bereich 8 des Lastträgers 7, 8 zu verstehen ist.

Um die dritte Gelenkachse 10 ist eine Glenklasche 13 schwenkbar angeordnet. Das durch eine Kolben-Zylinder-Einheit gebildete Stellgerät 11 ist mit seinem Zylinder 11a an der zweiten Gelenkachse 6 und mit dem freien Ende seiner Kolbenstange 11b über eine vierte Gelenkachse 12 mit der Gelenklasche 13 gelenkig verbunden. Der Grundlenker 9, die Gelenklasche 13 und das Stellgerät 11 bilden somit ein Lenkersystem L1 in Form eines Dreipunktlenkers. An die vierte Gelenkachse 12 ist weiterhin das eine Ende einer ein Gestänge bildenden Stellstange 14 angelenkt, die in dem nach unten offenen U-Profil eines Gabelschenkels der Lasttraggabel 8 verläuft. Das andere Ende der Stellstange 14 ist an einer an dem fahrwerkfernen Bereich 8 des Lastträgers 7, 8 angeordneten Laufradhalterung 17 über eine Gelenkachse 15 angelenkt. Die Laufradhalterung 17 ist um eine mit der Lasttraggabel 8 verbundenen Schwenkachse 16 schwenkbar. Die Laufradhalterung 17 weist darüber hinaus ein um eine Schwenkachse 18 schwenkbares Tandemfahrwerk auf, das aus einem Rollenhalter 19 und zwei um Achsen 20 drehbare Rollen bzw. Laufräder 21 besteht.

Um den Gabelhubwagen aus einer in Fig. 1 gezeigten unteren Stellung in eine in Fig. 2 gezeigte obere Stellung mit jeweils zum Fahrboden paralleler Lasttraggabel 8 zu bringen, werden bei konstant bleibender Längeneinstellung des Stellgeräts 11 die Kolbenstangen 4a der Hubzylinder 4 ausgefahren. Dabei schwenken auf je einer Kreisbogenbahn jeweils die dritte Gelenkachse 10 sowie die vierte Gelenkachse 12 um die zweite Gelenkachse 6 nach oben (vgl. Fig. 4a). Dadurch wird die Stellstange 14 in Richtung auf den fahrwerkfernen Bereich 8 des Lastträgers 7, 8 nach vorne verschoben, wodurch die Laufradhalterung 17 um die Gelenkachse 16 schwenkt. Die Lasttraggabel 8 nimmt dann eine zu dem Fahrboden parallele, gegenüber der Fig. 1 angehobene Stellung ein.

Das Absenken des Lastträgers 7, 8 aus der Stellung gemäß Fig. 2 in die Stellung gemäß Fig. 1 erfolgt durch Einfahren der Kolbenstangen 4a der Hubzylinder 4 aufgrund des Eigengewichts des Lastträgers, so daß der Grundlenker 9 sowie das Stellgerät 11 zusammen mit der dritten und vierten Gelenkachse 10,12 um die zweite Gelenkachse 6 nach unten schwenken. Hierdurch wird die Stellstange 14 in Richtung auf den fahrwerknahen Bereich 7 des Lastträgers 7, 8 nach hinten bewegt. Die Laufradhalterung 17 schwenkt dann um die Gelenkachse 16 in ihrere Ausgangsstellung gemäß Fig. 1 zurück.

Soll nun eine Palette aufgenommen werden, die sich auf einer horizontalen Stellfläche befindet, wogegen der Gabelhubwagen auf einer geneigten Rampe steht (Fig. 3), so wird ausgehend von einer Systemstellung gemäß Fig. 2 die Kolbenstange 11b des Stellgeräts 11 eingefahren, wodurch die Gelenklasche 13 um die dritte Gelenkachse 10 schwenkt (vgl. Fig. 4a). Infolgedessen wird die Stellstange 14 in Richtung auf den fahrwerknahen Bereich 7 des Lastträgers 7, 8 nach hinten bewegt. Hierdurch wird erreicht, daß die Laufradhalterung 17 um die Achse 16 schwenkt, so daß die Lasttraggabel 8 gegenüber der geneigten Rampe eine geneigte Stellung einnimmt, wie dies in Fig. 3 dargestellt ist.

Um die Lasttraggabel 8 wieder in eine zu dem Fahrboden parallele Stellung zu bringen, besteht zum einen die Möglichkeit, daß durch Druckbeaufschlagung des Stellgeräts 11 dessen Kolbenstange 11b ausgefahren wird, wodurch die Lasttraggabel 8 eine Stellung gemäß Fig. 2 einnimmt. Zum anderen können aber auch die Kolbenstangen 4a der Hubzylinder 4 eingefahren werden, wodurch die Lasttraggabel 8 eine Stellung gemäß Fig. 1 einnimmt.

Die Hubgeräte 4 und je ein Lenkersystem L1 sind zu beiden Seiten der Längsmittelebene jeweils im Bereich eines Gabelschenkels der zwei Gabelschenkel aufweisenden Lasttraggabel 8 angeordnet. Das gleiche gilt für die beiden Stellstangen 14 und die beiden Laufradhalterungen 17.

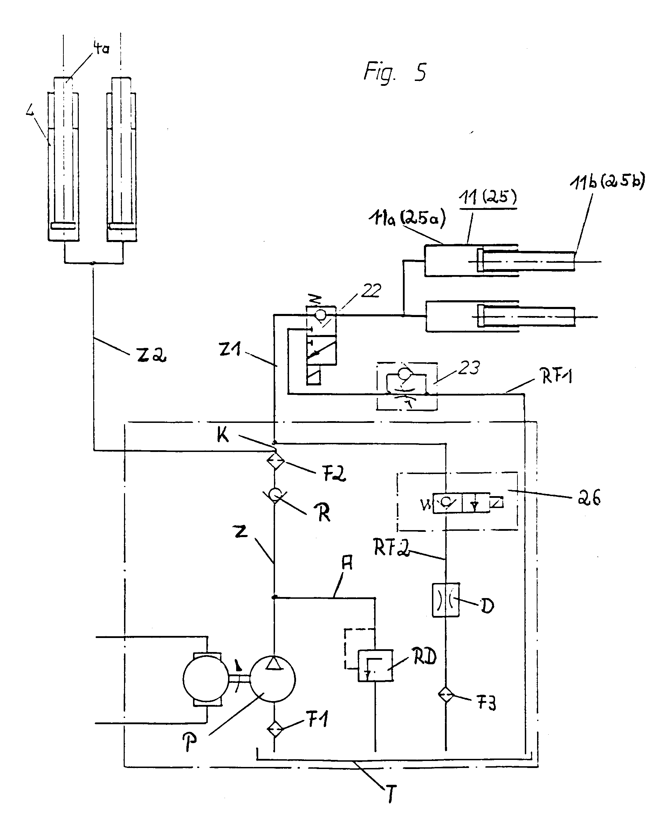

In der Fig. 5 ist ein Schema eines ersten Hydraulikkreises zur Verwendung bei dem Gabelhubwagen gezeigt.

Dieser Hydraulikkreis umfaßt eine beispielsweise durch einen E-Motor angetriebene Pumpe P, die aus einem Tank T über eine Zuführleitung Z Hydraulikfluid zu den beiden Hubzylindern 4 des Hubgeräts und zu den beiden Kolben-Zylinder-Einheiten 11 des Stellgeräts fördert. An einem Knotenpunkt K teilt sich hierzu die Zuführleitung Z in einen Zweig Z1 zu den beiden Kolben-Zylinder-Einheiten 11 und in einen Zweig Z2 zu den beiden Hubzylindern 4 auf.

In der Zuführleitung Z ist zwischen dem Tank T und der Pumpe P ein erster Filter F1 und zwischen der Pumpe P und dem Knoten K ein Rückschlagventil R sowie ein zweiter Filter F2 angeordnet. Darüber hinaus ist in der Zuführleitung Z zwischen Pumpe P und Knotenpunkt K, vor dem Rückschlagventil R ein Abzweig A zu dem Tank T vorgesehen, in dem eine Regeldrossel RD angeordnet ist. In dem Zweig Z1 der Zuführleitung Z ist ein magnetbetätigtes, durch eine Feder in eine Grundstellung vorgespanntes Wegesitzventil 22 angeordnet. In seiner Grundstellung ist es so geschaltet, daß eine Verbindung zwischen dem Tank T und den Stellgeräten 11 besteht. Eine Rückführleitung RF1 ist ebenfalls mit dem Wegesitzventil 22 verbunden. Diese Rückführleitung RF1 führt von dem Wegesitzventil 22 über eine weitere Regeldrossel 23 zu dem Tank T. Die Regeldrossel 23 ist mit einem parallel zu ihr geschalteten Rückschlagventil versehen, das so angeordnet ist, daß ein Fluidfluß von dem Tank zu dem Wegesitzventil 22 und von dort, bei entsprechender Schaltung, zu den Stellgeräten 11 möglich ist. Desweiteren ist das Ventil 22 mit einer Rückschlagsicherung versehen, die einen Rückfluß des Druckfluids von den Stellgeräten 11 zu dem Tank T verhindert, wenn sich das Wegesitzventil 22 in seiner Grundstellung befindet. Eine zweite Rückführleitung RF2 führt von dem Knotenpunkt K über ein weiteres magnetbetätigtes und in eine Grundstellung vorgespanntes Wegesitzventil 26, über eine Drossel D und über einen weiteren Filter F3 zu dem Tank T. In der Grundstellung dieses Ventils 26 ist durch eine Rückschlagsicherung ein Fluß des Druckfluids von dem Knoten K zu dem Tank T nicht möglich.

Um den Lastträger 7, 8 aus der Stellung der Fig. 1 in die Stellung der Fig. 2 zu bewegen, wird durch die Pumpe P von dem Tank T über die Zuführleitung Z Hydraulikfluid zu den Hubzylindern 4 gefördert, wodurch der Lastträger 7, 8 in die Stellung der Fig. 2 gelangt. Das Wegesitzventil 22 nimmt dabei seine Grundstellung ein. Da die Kolbenstangen 11b der Stellgeräte 11 bereits ausgefahren sind, werden diese durch diesen Fluidfluß nicht beeinflußt.

Soll nun, ausgehend von der Systemstellung gemäß Fig. 2, eine Gabelneigung erzielt werden, so wird das magnetbetätigte Wegesitzventil 22 so geschaltet, daß zwischen den Stellgeräten 11 und der Rückführleitung RF1 eine Verbindung besteht. Durch das Eigengewicht des Lastträgers oder durch Anfahren des Gabelhubwagens gegen die Rampe werden die Kolbenstangen 11b der Kolben-Zylinder-Einheiten 11 eingefahren und drücken dabei das Hydraulikfluid über das magnetbetätigte Wegesitzventil 22, der Regeldrossel 23 und über die Rückführleitung RF1 zu dem Tank T.

Soll nach Aufnahme der Palette die Lasttraggabel 8 wieder in eine zu dem Fahrboden parallele Stellung gemäß Fig. 2 gebracht werden, so wird zunächst das magnetbetätigte Wegesitzventil 22 in die in der Fig. 5 dargestellten Stellung gebracht. Anschließend wird durch einen elektrischen Impuls die Pumpe P veranlaßt, Hydraulikfluid von dem Tank T über die Zuführleitung Z, den Knoten K, den Zweig Z1 und das magnetbetätigte Wegesitzventil 22 zu den Kolben-Zylinder-Einheiten 11 des Stellgerätes zu fördern. Hierdurch werden die Kolbenstangen 11b der Kolben-Zylinder-Einheiten 11 ausgefahren. Die Lasttraggabel 8 nimmt dann wiederum die Stellung gemäß Fig. 2 ein. Da die Kolbenstangen 4a der Hubzylinder 4 bereits vollständig ausgefahren sind, werden sie hierdurch nicht beeinflußt.

Es besteht aber auch die Möglichkeit, daß die Lasttraggabel 8 aus der in der Fig. 3 dargestellten Stellung in die in der Fig. 1 dargestellte Stellung gebracht wird. Hierzu wird das magnetbetätigte Wegesitzventil 26 in eine Stellung gebracht, die einen Durchfluß von Hydraulikfluid von den Hub-Zylindern 4 des Hubgeräts zu dem Tank T ermöglicht. Durch das Eigengewicht des Lastträgers 7, 8 werden die Kolbenstangen 4a der Hub-Zylinder 4 eingefahren, wobei gleichzeitig die Kolbenstangen 11b der Kolben-Zylinder-Einheiten 11 des Stellgerätes ausgezogen werden. Dabei füllen sich die Stellzylinder 11a mit Hydraulikfluid.

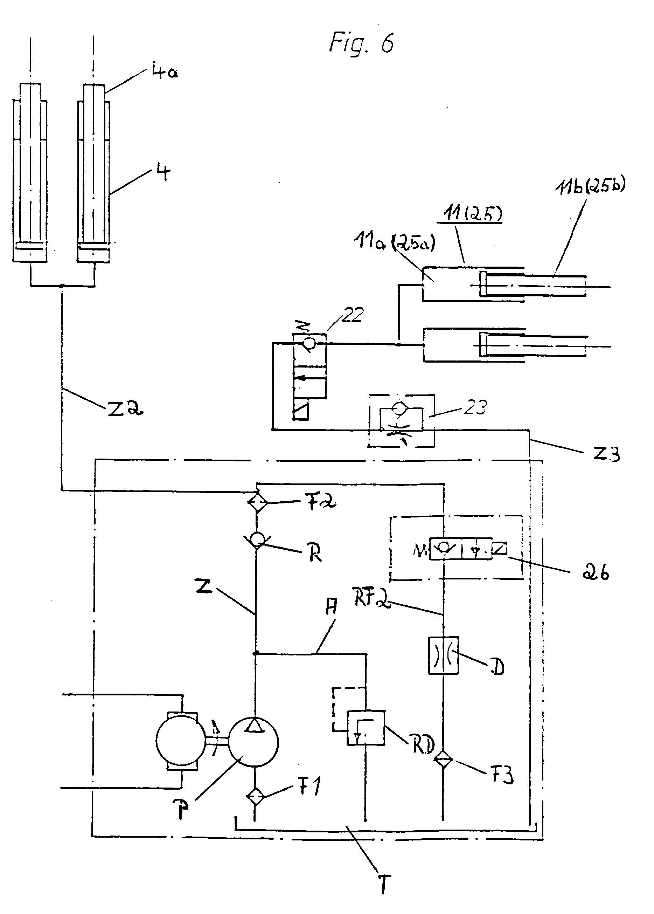

In der Fig. 6 ist ein vereinfachtes Hydraulikschema gezeigt, das gegenüber der Fig. 5 sich dadurch unterscheidet, daß zwischen der Pumpe P und den Kolben-Zylinder-Einheiten 11 des Stellgerätes keine Verbindung besteht. Das Anheben bzw. Absenken der Lasttraggabel 8 in paralleler Stellung zum Fahrboden geschieht bei diesem Hydraulikschema ebenso wie bei dem gemäß Fig. 5. Auch das Einfahren der Kolbenstangen 11b der Kolben-Zylinder-Einheiten 11 des Stellgerätes zur Erzielung einer Gabelneigung erfolgt in der gleichen Weise, wie es im Zusammenhang mit der Fig. 5 beschrieben worden ist. Insofern wird darauf Bezug genommen. Um nach Aufnehmen der Palette in der Stellung gemäß Fig. 3 die Lasttraggabel 8 wieder in eine zu dem Fahrboden parallele Stellung zu bringen, wird bei dem Hydraulikschema gemäß Fig. 6 das magnetbetätigte Wegesitzventil 26 so geschaltet, daß eine Verbindung zwischen den Hub-Zylindern 4 des Hubgerätes und dem Tank T besteht. Durch das Eigengewicht des Lastträgers 7, 8 werden die Kolbenstangen 4a der Kolben-Zylinder-Einheiten 4 eingefahren. Dabei werden gleichzeitig die Kolbenstangen 11b der Kolben-Zylinder-Einheiten 11 des Stellgerätes aus ihrer eingefahrenen Stellung herausgezogen. Über die Zuführleitung Z3 und über das zu der Regeldrossel 23 parallele Rückschlagventil saugen die Kolben der Kolben-Zylinder-Einheiten 11 Hydraulikfluid von dem Tank T in die Zylinderräume.

Der Unterschied zwischen dem Hydraulikschema gemäß Fig. 5 und gemäß Fig. 6 besteht also darin, daß bei dem Hydraulikschema gemäß Fig. 6 die Lasttraggabel 8 aus der Stellung nach der Fig. 3 nur in eine Stellung gemäß der Fig. 1 bringbar ist. Im Gegensatz hierzu ist es mit dem Hydraulikschema nach der Fig. 5 möglich, die Lasttraggabel 8 nach ihrer Stellung gemäß der Fig. 3 unmittelbar in eine Stellung gemäß der Fig. 1 oder gemäß der Fig. 2 zu bringen.

Es sei darauf hingewiesen, daß die Erfindung nicht auf diese beiden, in den Fig. 5 und 6 gezeigten Hydraulikkreise beschränkt ist. Es sind selbstverständlich auch andere Hydraulikkreise möglich.

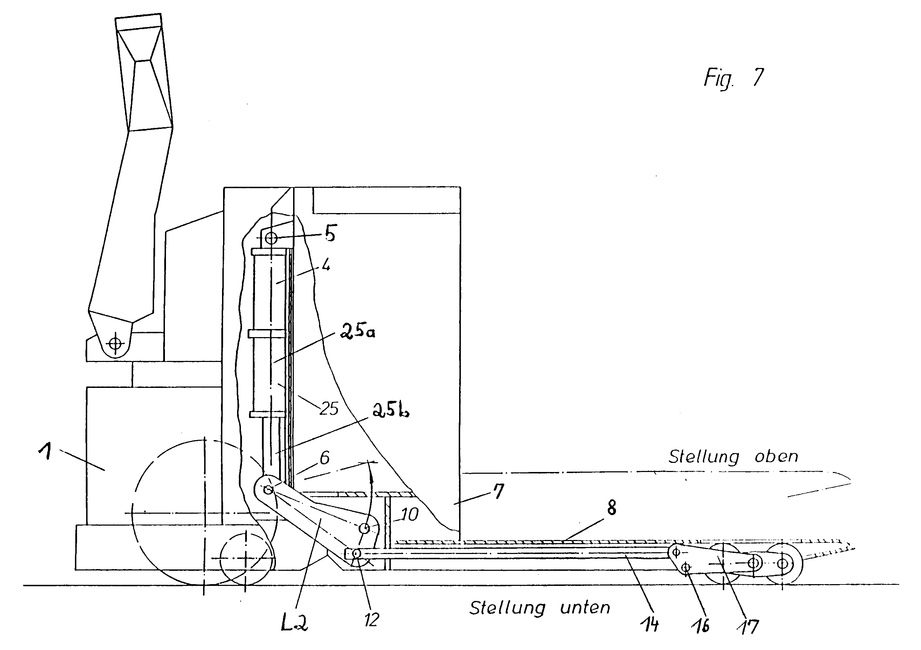

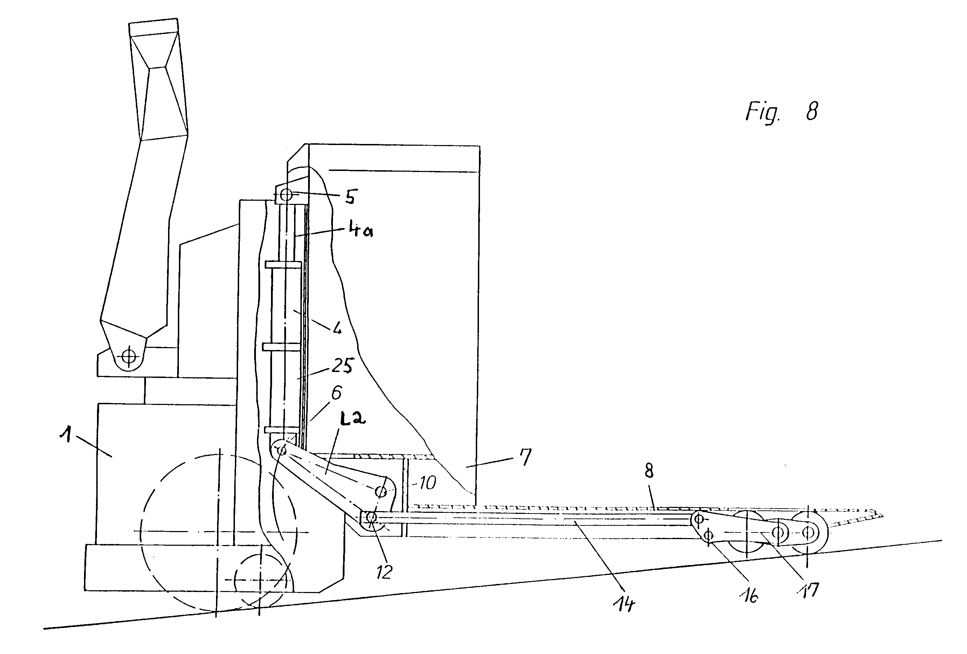

In den Fig. 7 und 8 ist eine weitere Ausführungsform des Gabelhubwagens dargestellt. Sie unterscheidet sich im Gegensatz zu der gemäß den Figuren 1 bis 4b gezeigten Ausführungsform dadurch, daß ein Lenkersystem L2 von einem in sich starren Dreipunktlenker gebildet wird, der ebenfalls an der zweiten, dritten und vierten Gelenkachse 6, 10, 12 angelenkt ist. Das Stellgerät zur Betätigung des Lenkersystems L2 ist auch hier durch eine Kolben-Zylinder-Einheit 25 gebildet, die aber mit ihrem Zylinder 25a in dem Fahrwerk 1 fest angebracht ist und mit dem freien Ende ihrer Kolbenstange 25b an der zweiten Gelenkachse 6 angreift. Diese Kolben-Zylinder-Einheit 25 bildet mit den Hub-Zylindern 4 des Hubgerätes eine Baugruppe.

Um die Lasttraggabel 8 des Lastträgers 7, 8 in eine zu dem Fahrboden parallele, obere Stellung zu bringen, wie dies in Fig. 7 strichpunktiert angedeutet ist, werden die Hub-Zylinder 4 des Hubgerätes mit Hydraulikfluid beaufschlagt, wodurch deren Kolbenstangen 4a ausgefahren werden (vgl. Fig. 8). Der Dreipunktlenker L2 schwenkt dabei um die zweite, ihre Position nicht verändernde Gelenkachse 6, wie dies in der Fig. 7 ebenfalls angedeutet ist. Hierdurch wird die Stellstange 14 in Richtung auf den fahrwerkfernen Bereich 8 des Lastträgers 7, 8 nach vorne geschoben, wodurch die Laufradhalterung 17 um die Gelenkachse 16 der Lasttraggabel 8 schwenkt. Soll nun, ausgehend von der so erreichten Stellung, die Lasttraggabel 8 in eine zu dem Fahrboden geneigte Stellung gebracht werden, so wird die Kolben-Zylinder-Einheit 25 zur Entleerung freigegeben, wodurch dann durch Anfahren des Gabelhubwagens an die Rampe, deren Kolbenstange 25b eingefahren wird. Dabei schwenkt der Dreipunktlenker L2 um die dritte Gelenkachse 10 des Lastträgers 7, 8. Um nach Aufnahme der Palette den Gabelhubwagen wieder in eine Stellung gemäß der Fig. 7 zu verbringen, ist es notwendig, die Kolben-Zylinder-Einheit 25 des Stellgerätes mit Hydraulikfluid zu beaufschlagen, wodurch die Kolbenstange 25b dieser Kolben-Zylinder-Einheit 25 ausgefahren wird. Es besteht aber auch hier die Möglichkeit, die Lasttraggabel 8, ausgehend von der Stellung gemäß Fig. 8, in eine untere Stellung gemäß Fig. 7 zu bringen. Hierzu werden die Kolbenstangen 4a der Hub-Zylinder 4 des Hubgerätes eingefahren, wodurch die Kolbenstange 25b der Kolben-Zylinder-Einheit 25 aus ihrer eingefahrenen Stellung durch den Dreipunktlenker L2 herausgezogen wird. Es sind also auch bei der Ausführungsform nach den Fig. 7 und 8 beide Hydrauliksysteme gemäß den Fig. 5 und 6 anwendbar.

Abschließend sei noch erwähnt, daß in dem Fahrwerk 1 sämtliche nicht weiter gezeigten Antriebsmittel und Energieträger, wie beispielsweise Batterien, sowie alle Steuerungs- und Bedienungselemente für den Gabelhubwagen aufgenommen sind. Außerdem weist das Fahrwerk 1 noch zwei Stützräder 30 auf (vgl. Fig. 1).

## Patentansprüche

1. Gabelhubwagen mit einem lenkbaren Fahrwerk (1) und einem an dem Fahrwerk (1) geführten Lastträger (7, 8), insbesondere mit einer Lasttraggabel (8), wobei ein fahrwerknaher Bereich (7) des Lastträgers (7, 8) durch mindestens ein Hubgerät (4) des Fahrwerks (1) höhenverstellbar abgestützt ist und ein fahrwerkferner Bereich (8) des Lastträgers (7, 8) durch mindestens ein an diesem mittels einer höhenverstellbaren Laufradhalterung (17) gelagerten Laufrads (21) unterstützt ist,
wobei weiter die Höhenverstellung des Laufrads (21) gegenüber dem fahrwerkfernen Bereich (8) des Lastträgers (7, 8) von der Höheneinstellung des fahrwerknahen Bereichs (7) des Lastträgers (7, 8) gegenüber dem Fahrwerk (1) abgeleitet ist und zwar vermittels eines mit dem Fahrwerk (1) einerseits und dem fahrwerknahen Bereich (7) andererseits verbundenen Lenkersystems (L1, L2) und vermittels eines diesem Lenkersystem (L1, L2) nachgeschalteten, auf die Laufradhalterung (17) wirkenden Gestänges (14), und
wobei das Lenkersystem (L1, L2) zusätzlich durch mindestens ein Stellgerät (11, 25) beeinflußbar ist,
**dadurch gekennzeichnet,**
daß die Verbindung zwischen dem fahrwerknahen Bereich (7) des Lastträgers (7, 8) und dem Hubgerät (4) als Gelenkverbindung mit einer ersten Gelenkachse (5) ausgebildet ist,
daß ferner der fahrwerknahe Bereich (7) des Lastträgers (7, 8) an dem Fahrwerk (1) vermittels mindestens eines als Dreipunktlenker ausgeführten Lenkersystems (L1, L2) auf einer Kreisbogenbahn geführt ist, welcher Dreipunktlenker (L1, L2) in einer zweiten Gelenkachse (6) mit dem Fahrwerk (1), in einer dritten Gelenkachse (10) mit dem fahrwerknahen Bereich (7) des Lastträgers (7, 8) und in einer vierten Gelenkachse (12) mit dem Gestänge (14) gelenkig verbunden ist und
daß das Stellgerät (11, 25) entweder zur Verstellung der vierten Gelenkachse (12) innerhalb des Dreipunktlenkers (L1) oder zur Verstellung der zweiten Gelenkachse (6) gegenüber dem Fahrwerk (1) eingesetzt ist.

2. Gabelhubwagen nach Anspruch 1, **dadurch gekennzeichnet,** daß der Dreipunktlenker (L1) von einem die zweite Gelenkachse (6) und die dritte Gelenkachse (10) miteinander verbindenden Grundlenker (9), einer die dritte Gelenkachse (10) und die vierte Gelenkachse (12) verbindenden Gelenklasche (13) und dem die zweite Gelenkachse (6) und die vierte Gelenkachse (12) miteinander verbindenden Stellgerät (11) gebildet ist.

3. Gabelhubwagen nach Anspruch 1, **dadurch gekennzeichnet,** daß die zweite, dritte und vierte Gelenkachse (6, 10, 12) an dem Dreipunktlenker (L2) in starrer gegenseitiger Lage angebracht sind und daß die zweite Gelenkachse (6) gegenüber dem Fahrwerk (1) in annähernd vertikaler Richtung verstellbar ist.

4. Gabelhubwagen nach Anspruch 3, **dadurch gekennzeichnet,** daß das Stellgerät (25) mit dem Hubgerät (4) eine im wesentlichen vertikal an dem Fahrwerk (1) angebrachte Baueinheit bildet.

5. Gabelhubwagen nach einem der Ansprüche 1 bis 4, **dadurch gekennzeichnet,** daß das Stellgerät (11, 25) als Kolben-Zylindereinheit gestaltet ist.

6. Gabelhubwagen nach Anspruch 5, **dadurch gekennzeichnet,** daß der Stellzylinder (11a, 25a) des Stellgeräts (11, 25) nur einen Anschluß besitzt.

7. Gabelhubwagen nach Anspruch 6, **dadurch gekennzeichnet,** daß der Stellzylinder (11a, 25a) des Stellgeräts (11, 25) über ein Steuerventil (22) mit gegebenenfalls integrierter Rückschlagsicherung an einen Hydraulikkreis mit Pumpe (P) und Tank (T) angeschlossen ist.

8. Gabelhubwagen nach Anspruch 6, **dadurch gekennzeichnet,** daß der Stellzylinder (11a, 25a) des Stellgeräts (11, 25) über ein Steuerventil (22) mit gegebenenfalls integrierter Rückschlagsicherung wahlweise in Entleerungs- oder Füllverbindung mit einem Tank (T) bringbar ist.

9. Gabelhubwagen nach Anspruch 7 oder 8, **dadurch gekennzeichnet,** daß in einer Rückflußleitung (RF1, Z3) von dem Stellzylinder (11a, 25a) des Stellgeräts (11, 25) zu dem Tank (T) ein Drosselventil (23) eingeschaltet ist.

10. Gabelhubwagen nach einem der Ansprüche 7 bis 10, **dadurch gekennzeichnet,** daß ein Schalter für das Steuerventil (22) an der Deichsel (3) angebracht ist.

## Claims

1. A fork lift truck with a steerable chassis (1) and, guided on the chassis (1), a load carrier (8, 9), particularly with a load carrying fork (8), an area (7) of the load carrier (7, 8) which is close to the chassis being vertically adjustably supported by at least one lifting unit (4) on the chassis (1), a portion (8) of the load carrier (7, 8) which is remote from the chassis being supported underneath by at least one wheel (21) mounted thereon by means of a vertically adjustable wheel mounting (17), whereby furthermore the vertical adjustment of the wheel (21) in respect of the portion (8) of the load carrier (7, 8) which is remote from the chassis is derived from the vertical adjustment of the area (7) of the load carrier (7, 8) which is close to the chassis in relation to the chassis (1) and in fact by means of a steering system (L1, L2) connected on the one hand to the chassis (1) and on the other to the portion (7) remote from the chassis and by means of a linkage (16) downstream of the steering system (L1, L2) and acting on the wheel mounting (17) and whereby the steering system (L1, L2) can be additionally influenced by at least one positioning unit (11, 25), characterised in that the connection between the portion (7) of the load carrier (7, 8) which is close to the chassis and the lifting unit (4) is constructed as an articulated connection with a first articulation spindle (5), and in that furthermore the area (7) of the load carrier (7, 8) which is close to the chassis is guided over an arcuate path by means of at least one steering system (L1, L2) constructed as a three-point linkage, said three-point linkage (L1, L2) being articulatingly connected at a second articulation spindle (6) to the chassis (1) and in a third articulation spindle (10) to that portion (7) of the load carrier (7, 8) which is close to the chassis and to the linkage (14) at a fourth articulation spindle (12) and in that the positioning unit (11, 25) is used either for adjusting the fourth articulation spindle (12) within the three-point linkage (L1) or for adjusting the second articulation spindle (6) in relation to the chassis (1).

2. A fork lift truck according to claim 1, characterised in that the three-point linkage (L1) is formed by a basic connecting member (9) connecting the second articulation spindle (6) and the third articulation spindle (10) to each other, an articulating tie rod (13) connecting the third articulation spindle (10) and the fourth articulation spindle (12) and the positioning unit (11) connecting the second articulation spindle (6) and the fourth articulation spindle (12) to each other.

3. A fork lift truck according to claim 1, characterised in that the second, third and fourth articulation spindles (6, 10, 12) are mounted on the three-point linkage (L2) in a fixed position in respect of one another and that the second articulation spindle (6) is adjustable in a virtually vertical direction in relation to the chassis (1).

4. A fork lift truck according to claim 3, characterised in that together with the lifting unit (4), the positioning unit (25) constitutes a structural unit mounted substantially vertically on the chassis (1).

5. A fork lift truck according to one of claims 1 to 4, characterised in that the positioning unit (11, 25) is constructed as a piston-cylinder unit.

6. A fork lift truck according to claim 5, characterised in that the positioning cylinder (11a, 25a) of positioning unit (11, 25) has only one connection.

7. A fork lift truck according to claim 6, characterised in that the positioning cylinder (11a, 25a) of the positioning unit (11, 25) is connected via a control valve (22) with a possibly integrated non-return safeguard to a hydraulic circuit with a pump (P) and tank (T).

8. A fork lift truck according to claim 6, characterised in that the positioning cylinder (11a, 25a) of the positioning unit (11, 25) can via a control valve (22) possibly with an integrated non-return safeguard be moved optionally to a tank (T) for emptying or filling purposes.

9. A fork lift truck according to claim 7 or 8, characterised in that a throttle valve (23) is incorporated into a return flow pipe (RF1, Z3) from the positioning cylinder (11a, 25a) of the positioning unit (11, 25) to the tank (T).

10. A fork lift truck according to one of claims 7 to 10, characterised in that a switch for the control valve (22) is mounted on the draw bar (3).

## Revendications

1. Chariot à fourche comportant un dispositif de déplacement (1) dirigeable et un porte-charge (7, 8) monté sur le dispositif de déplacement (1), comportant en particulier une fourche porte-charge (8), une zone (7), proche du dispositif de déplacement, du porte-charge (7, 8) s'appuyant, avec possibilité de réglage en hauteur, sur au moins un élément de levage (4) du dispositif de déplacement (1), et une zone (8), éloignée du dispositif de déplacement, du porte-charge (7, 8) étant soutenue par au moins une roue porteuse (21) montée sur celui-ci au moyen d'un support de roues porteuses (17) réglable en hauteur,
le déplacement en hauteur de la roue porteuse (21) par rapport à la zone (8), éloignée du dispositif de déplacement, du porte-charge (7, 8) étant, en outre, dérivé de la position en hauteur de la zone (7), proche du dispositif de déplacement par rapport au dispositif de déplacement (1), à savoir par l'intermédiaire d'un système de bras oscillants (L1, L2) relié d'une part au dispositif de déplacement (1) et d'autre part à la zone (7), proche du dispositif de déplacement et par l'intermédiaire d'une timonerie (14) située en aval de ce système de bras oscillants (L1, L2) et agissant sur le support de roues porteuses (17) et
le système de bras oscillants (L1, L2) pouvant être influencé, en outre, par au moins un dispositif de réglage (11, 25),
caractérisé en ce que
la liaison entre la zone (7), proche du dispositif de déplacement, du porte-charge (7, 8) et l'élément de levage (4) est conformée en liaison articulée avec un premier axe d'articulation (5),
en ce qu'en outre la zone (7), éloignée du dispositif de déplacement, du porte-charge (7, 8) est montée sur le dispositif de déplacement (1) par l'intermédiaire d'au moins un système de bras oscillants (L1, L2) conformé en guidage à trois points sur une trajectoire en arc de cercle, système de guidage à trois points (L1, L2) qui est relié de façon articulée par un deuxième axe d'articulation (6) avec le dispositif de déplacement (1), par un troisième axe d'articulation (10) avec la zone (7), proche du dispositif de déplacement, du porte-charge (7, 8) et par un quatrième axe d'articulation (12) avec la timonerie (14) et
en ce que le dispositif de réglage (11, 25) est prévu soit pour le déplacement du quatrième axe d'articulation (12) à l'intérieur du système de guidage à trois points (L1) soit pour le déplacement du deuxième axe d'articulation (6) par rapport au dispositif de déplacement (1).

2. Chariot à fourche selon la revendication 1, caractérisé en ce que le système de guidage à trois points (L1) est constitué d'un bras oscillant de base (9) reliant entre eux le deuxième axe d'articulation (6) et le troisième axe d'articulation (10), d'une barre de liaison d'articulation (13) reliant le troisième axe d'articulation (10) et le quatrième axe d'articulation (12), et du dispositif de réglage (11) reliant le deuxième axe d'articulation (6) et le quatrième axe d'articulation (12).

3. Chariot à fourche selon la revendication 1, caractérisé en ce que les deuxième, troisième et quatrième axes d'articulation (6, 10, 12) du système de guidage à trois points (L2) sont montés en position relative rigide et en ce que le deuxième axe d'articulation (6) est susceptible d'être déplacé par rapport au dispositif de déplacement (1) dans une direction approximativement verticale.

4. Chariot à fourche selon la revendication 3, caractérisé en ce que le dispositif de réglage (25) et l'élément de levage (4) forment une unité constructive disposée de façon sensiblement verticale sur le dispositif de déplacement (1).

5. Chariot à fourche selon l'une des revendications 1 à 4, caractérisé en ce que le dispositif de réglage (11, 25) est conformé en unité piston-cylindre.

6. Chariot à fourche selon la revendication 5, caractérisé en ce que le cylindre de réglage (11a, 25a) du dispositif de réglage (11, 25) ne possède qu'un branchement.

7. Chariot à fourche selon la revendication 6, caractérisé en ce que le cylindre de réglage (11a, 25a) du dispositif de réglage (11, 25) est branché, par l'intermédiaire d'une vanne pilote (22) éventuellement pourvue d'une sécurité anti-retour, sur un circuit hydraulique avec une pompe (P) et un réservoir (T).

8. Chariot à fourche selon la revendication 6, caractérisé en ce que le cylindre de réglage (11a, 25a) du dispositif de réglage (11, 25) est susceptible d'être mis en communication, par l'intermédiaire d'une vanne pilote (22) éventuellement pourvue d'une sécurité anti-retour, pour effectuer, au choix, une vidange ou un remplissage.

9. Chariot à fourche selon la revendication 7 ou 8, caractérisé en ce qu'une vanne à étranglement (23) est montée dans une conduite de retour (RF1, Z3) conduisant du cylindre de réglage (11a, 25a) du dispositif de réglage (11, 25) au réservoir (T).

10. Chariot à fourche selon l'une des revendications 7 à 10, caractérisé en ce qu'un commutateur destiné à la vanne pilote (22) est prévu sur le timon (3).
